(19) Europäisches Patentamt
European Patent Office
Office européen des brevets

(11) Veröffentlichungsnummer: **0 247 410 A2**

(12) **EUROPÄISCHE PATENTANMELDUNG**

(21) Anmeldenummer: **87106680.9**

(22) Anmeldetag: **08.05.87**

(51) Int. Cl.⁴: **B 23 B 29/04**

(30) Priorität: **26.05.86 DE 3617695**

(43) Veröffentlichungstag der Anmeldung: **02.12.87 Patentblatt 87/49**

(84) Benannte Vertragsstaaten: **CH DE FR GB IT LI**

(71) Anmelder: **Fried. Krupp Gesellschaft mit beschränkter Haftung, Altendorfer Strasse 103, D-4300 Essen 1 (DE)**

(72) Erfinder: **von Haas, Rainer, Krümmelstrasse 26, D-2054 Geesthacht (DE)**

(54) **Kupplung zur Verbindung von Werkzeugkopf und Werkzeughalter an Werkzeugmaschinen.**

(57) Die Erfindung betrifft eine Kupplung zum schnellen Verbinden und Lösen von Werkzeugkopf und Werkzeughalter an Werkzeugmaschinen, bei denen der Werkzeugkopf mit einem Aufnahmezapfen und einem ringförmigen Anlagebund versehen ist, die mit einer entsprechenden Aufnahmebohrung und einer ringförmigen Gegenfläche des Werkzeughalters zusammenwirken, wobei Werkzeughalter und Werkzeugkopf mit Hilfe von Spannelementen, die über eine Spannvorrichtung betätigt werden, so verriegelbar sind, daß der Anlagebund des Werkzeugkopfes an der Gegenfläche des Werkzeughalters fest anliegt. Die radiale Abstützung des Aufnahmezapfens des Werkzeugkopfes in der Aufnahmebohrung des Werkzeughalters erfolgt dabei durch mindestens einen zylindrischen Bund, der gegenüber der entsprechenden Paßfläche in der Aufnahmebohrung ein geringes Übermaß aufweist.

EP 0 247 410 A2

FRIED. KRUPP GESELLSCHAFT MIT BESCHRÄNKTER HAFTUNG
in Essen

**Kupplung zur Verbindung von Werkzeugkopf und Werkzeughalter an Werkzeugmaschinen**

Die Erfindung betrifft eine Kupplung zum schnellen Verbinden und Lösen von Werkzeugkopf und Werkzeughalter an Werkzeugmaschinen, bei denen der Werkzeugkopf mit einem Aufnahmezapfen und einem ringförmigen Anlagebund versehen ist, die mit einer entsprechenden Aufnahmebohrung und einer ringförmigen Gegenfläche des Werkzeughalters zusammenwirken, wobei Werkzeughalter und Werkzeugkopf mit Hilfe von Spannelementen, die über eine Spannvorrichtung betätigbar sind, so verriegelt werden, daß der Anlagebund des Werkzeugkopfes an der Gegenfläche des Werkzeughalters fest anliegt.

Um die Aufgabe zu lösen, eine schnell wechselbare Verbindung zwischen einem Werkzeugkopf und dem Werkzeughalter an einer Werkzeugmaschine zu schaffen, sind schon verschiedene Konstruktionen vorgeschlagen worden. Bei diesen Konstruktionen besitzt der Werkzeugkopf meist einen kegeligen Aufnahmezapfen, der in eine entsprechende Aufnahmebohrung des Werkzeughalters paßt. Nach dem Einführen des kegeligen Aufnahmezapfens in die Aufnahmebohrung wird der Werkzeugkopf mit Hilfe einer geeigneten Spannvorrichtung so verspannt, daß er durch die kegeligen Flächen von Aufnahmebohrung und Aufnahmezapfen radial verspannt ist und axial sich am ringförmigen Anlagebund des Werkzeughalters abstützt. Bei den bekannten Kupplungen dieser Art ist aber die Verwendung von kegeligen Kupplungsteilen nachteilig, weil sie einen relativ hohen Fertigungsaufwand erfordern, ohne den die notwendige Präzision und die Austauschbarkeit von Werkzeugkopf und Werkzeughalter nicht gewährleistet ist.

Die vorliegende Erfindung befaßt sich mit der Aufgabe, eine Kupplungseinrichtung zu schaffen, deren radial tragende Teile aus Elementen aufgebaut sind, die auch mit einfachen und üblichen Fertigungsmitteln ohne größere Schwierigkeiten herzustellen sind. Außerdem soll die Erfindung eine relativ kompakte Bauweise aufweisen.

Die Lösung dieser Aufgabe wird mit einer Kupplung der im Oberbegriff des Hauptanspruchs angegebenen Art erreicht, die die Merkmale des kennzeichnenden Teils des Hauptanspruchs aufweist. Da nach der Erfindung zum radialen Abstützen des Werkzeugkopfes in der Aufnahmebohrung des Werkzeughalters zylindrische und nicht konische Teile benutzt werden, läßt sich die erfindungsgemäße Kupplung recht einfach herstellen. Zweckmäßig ist es, wenn das Übermaß an dem oder den zylindrischen Bunden am Aufnahmezapfen des Werkzeugkopfes gegenüber den Gegenflächen in der Aufnahmebohrung des Werkzeughalters je nach dem Durchmesser des Werkzeugzapfens und dem Durchmesser des Werkzeughalters im Bereich von dessen Aufnahmebohrung und dem Werkstoff des Werkzeughalters zwischen 1/100 und 1/10 mm beträgt. Ein solches Übermaß genügt in der Regel, um eine sichere und ausreichende Verspannung des Werkzeugkopfes im Werkzeughalter zu erreichen.

Vorteilhaft ist es, wenn die radiale Abstützung des Aufnahmezapfens durch zwei zylindrische Bunde am Aufnahmezapfen des Werkzeugkopfes erfolgt, wobei der vom Werkzeug am weitesten entfernte Bund zweckmäßig einen geringeren Durchmesser besitzt als der dem Werkzeug näher gelegene Bund. Dies erleichtert das Einführen des Aufnahmezapfens in die Aufnahmebohrung.

Da das Einführen des Aufnahmezapfens des Werkzeugkopfes in die Aufnahmebohrung des Werkzeughalters Reibung verursacht, die zu Verschleiß führt, werden nach einem weiteren Schritt der Erfindung die aufeinander gleitenden Flächen mit einem die Gleitfähigkeit fördernden Werkstoff, z.B. mit dem als unter dem Namen Teflon im Handel befindlichen Kunststoff, beschichtet. Besonders zweckmäßig ist es aber, wenn nach einem weiteren Schritt der Erfindung anstelle zylindrischer Bunde Kugeln vorgesehen werden, die auf dem zylindrischen Aufnahmezapfen des Werkzeugkopfes angeordnet und dort durch geeignete Käfige festgehalten werden. Beispielsweise können hier Wälzlagersysteme verwendet werden, wie sie als sogen. "Hochgenau-Kugelführung" im Maschinenbau und in der Feinwerktechnik bekannt geworden sind. Bei Anwendung dieses Erfindungsgedankens läßt sich der Aufnahmezapfen in Achsrichtung leicht verschieben.

Nach einem weiteren Schritt der Erfindung wird die Verriegelung des Werkzeugkopfes mit dem Werkzeughalter durch ein längsverschiebliches Spannelement erreicht, das mit radial beweglichen Gleitsteinen zusammenwirkt, die bei der Längsverschiebung des Spannelements radial in Ausnehmungen eindringen, die in der Aufnahmebohrung des Werkzeughalters vorgesehen sind und dadurch Werkzeugkopf und Werkzeughalter miteinander verriegeln. Das längsverschiebliche Spannelement kann in einfacher Weise als Spindel ausgebildet sein, die durch eine Mutter bewegt wird, die wiederum vorteilhaft im Werkzeugkopf selbst angeordnet ist. Diese Mutter kann an ihrem Umfang mit einer Schneckenradverzahnung versehen sein, die durch eine Schnecke angetrieben wird, die quer zu deren Längsrichtung im Werkzeugkopf gelagert ist. Die Schnecke kann seitlich aus einer Ausnehmung im Werkzeugkopf herausragen und dort mit einem Vierkant oder einer ähnlichen Formgebung versehen sein, so daß die Spindel durch einen geeigneten Schlüssel, der seitlich auf den Vierkant od. dgl. aufgesetzt wird, betätigt werden kann. Bei axialer Bewegung der Spindel in Richtung Werkzeugkopf wird der Werkzeugkopf gespannt. Wird jedoch der Drehsinn des Schneckenrades geändert und die Spindel in die entgegengesetzte Richtung bewegt, so werden die Gleitsteine beim Zusammenwirken mit schrägen Flächen der Spindel entlastet und bewegen sich in Richtung Achsmitte, wodurch die Entriegelung von Werkzeugkopf und Werkzeughalter erfolgt.

Bei geeigneter Ausführung des dem Werkzeugkopf gegenüberliegenden Endes der Spindel kann diese bei weiterer Längsbewegung in Richtung auf den Werkzeughalter zu nach Entriegeln der beiden Teile zum Herausstoßen des Werkzeugkopfes aus der Bohrung des Werkzeughalters benutzt werden. Sie stößt dann mit ihrem, dem Gewinde abgewandten Ende gegen die Grundfläche der Aufnahmebohrung im Werkzeughalter und drückt danach den Werkzeugkopf aus diesem heraus.

Wenn die als Spannelement dienende Spindel vom Werkzeughalter her angetrieben wird, kann umgekehrt ihr Endstück zum Ausstoßen des Werkzeugkopfes aus der Aufnahmebohrung im Werkzeughalter mit einer entsprechenden Fläche des Aufnahmezapfens zusammenwirken und nach der Entriegelung der radial beweglichen Gleitsteine den Werkzeugkopf aus der Aufnahmebohrung des Werkzeughalters herausdrücken.

Die axiale Bewegung der Spindel kann statt mittels eines Schneckenrades auch mittels einer Exzenterwelle herbeigeführt werden. In diesem Fall greift der Exzenter in ein Langloch im zylindrischen Teil des Spannelements, wobei bei geeigneter konstruktiver Auslegung des Exzenters der axiale Weg des Spannelements so gestaltet werden kann, daß nahe am einen Totpunkt des Exzenters die Spannung erfolgt und im anderen Totpunkt das Austreiben des Werkzeugkopfes aus dem Grundhalter durchgeführt wird.

Von besonderem Vorteil ist es, wenn das Schneckenrad oder der Exzenter, der zum Antrieb des längsverschieblichen Spannelements verwendet wird, in unmittelbarer Nähe des zylindrischen Ansatzes angeordnet ist, mit dem der Werkzeugkopf und der Werkzeughalter radial gegeneinander verspannt werden. In diesem Fall wird eine besonders günstige Einleitung der zur Verriegelung benötigten Kräfte erreicht.

Die Zeichnung zeigt Ausführungsbeispiele des Erfindungsgegenstandes, und zwar zeigt

Fig. 1 einen Längsschnitt durch die Kupplung zwisch einem Werkzeugkopf und einem Werkzeughalter,

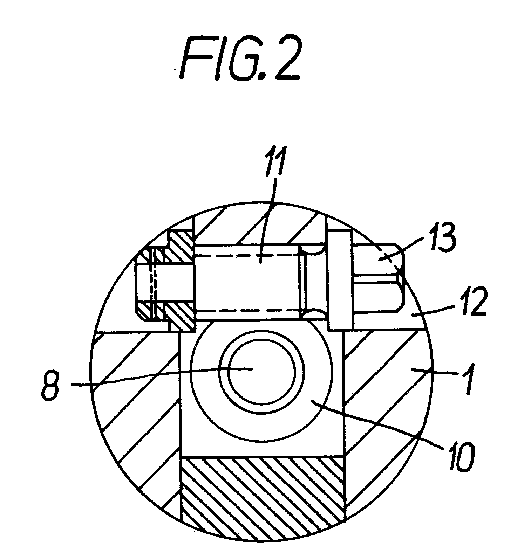

Fig. 2 einen Schnitt nach der Linie II-II in Fig. 1

Fig. 3 eine Kupplung zwischen Werkzeugkopf und Werkzeughalter, bei der die radiale Abstützung des Aufnahmezapfens des Werkzeugkopfes mittels Kugellagern erfolgt.

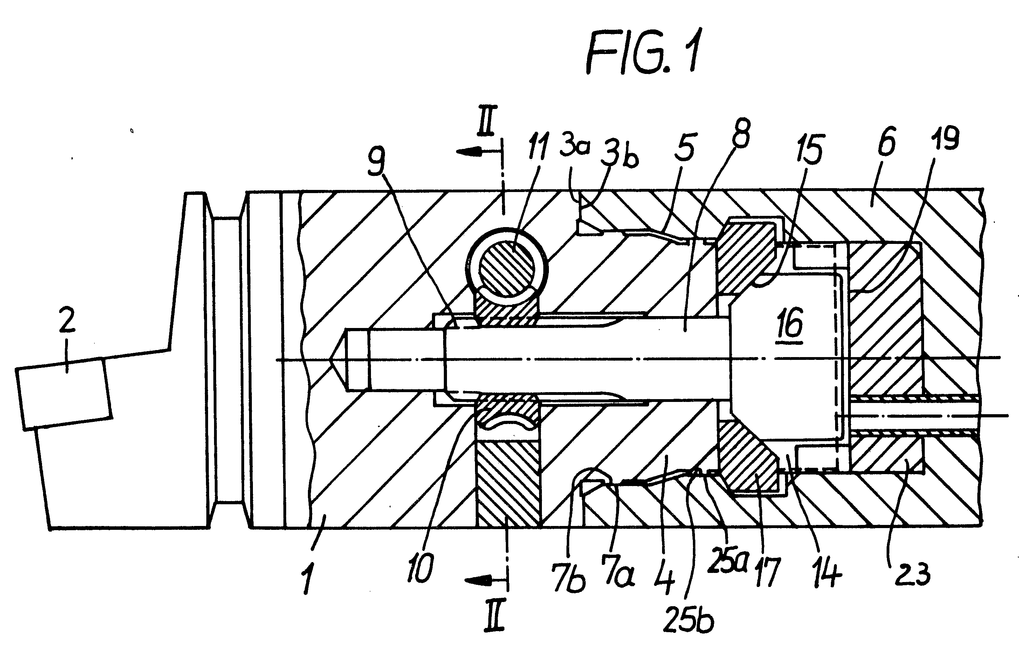

Der in Fig. 1 dargestellte Werkzeugkopf 1 ist mit einer Hartmetallschneidplatte 2 bestückt und besitzt einen axialen Anlagebund 3a, der mit einer entsprechenden Gegenfläche 3b des Werkzeughalters 6 zusammenwirkt, dessen vorderer, in der Zeichnung dargestellter Teil zylindrisch gestaltet ist. Mit 4 ist der Aufnahmezapfen des Werkzeugkopfs 1 bezeichnet, der in die Aufnahmebohrung 5 des Werkzeughalters 6 paßt. In dieser Aufnahmebohrung stützt sich der Aufnahmezapfen 4 mit einem durch einen zylindrischen Bund gebildeten Paßteil 7b radial an der entsprechenden Gegenfläche des Werkzeughalters 6 ab, wobei dieses Paßteil 7b gegenüber der entsprechenden Paßfläche 7a in der Aufnahmebohrung 5 des Werkzeughalters 6 ein geringes Übermaß aufweist, das abhängig vom Außendurchmesser des Werkzeugkopfes, der Wandstärke und dem verwendeten Material, zwischen 0,01 und 0,1 mm beträgt.

Der Aufnahmezapfen 4 des Werkzeugkopfes kann vorteilhaft mit zwei aus zylindrischen Bunden gebildeten Paßteilen versehen sein, von denen dann das dem Werkzeug näher angeordnete einen größeren Durchmesser besitzen soll als das am Ende des Aufnahmezapfens 4.

Mit 8 ist eine Spindel bezeichnet, die in Längsrichtung des Aufnahmezapfens 4 im Werkzeugkopf gelagert ist. Sie wirkt mit ihrem Gewinde 9 mit dem Innengewinde einer ebenfalls im Werkzeugkopf gelagerten Mutter 10 zusammen, deren Außenfläche mit einer Schneckenverzahnung versehen ist, die mit einer ebenfalls im Werkzeugkopf gelagerten Schnecke 11 zusammenwirkt, die senkrecht zur Spindel 8 angeordnet ist. Diese Schnecke 11 ragt seitlich aus einer Ausnehmung des Werkzeugkopfes 1 heraus und ist dort mit einem Vierkant versehen und kann daher mit Hilfe eines geeigneten Schlüssels von der Seite her gedreht werden. Erfolgt beispielsweise eine Rechtsdrehung der Schnecke 11, so verschiebt sich die Spindel 8 nach links und schiebt über die schrägen Gleitflächen 15 ihres Kopfes 16 die in dem Raum 14 in der Aufnahmebohrung 5 des Werkzeughalters 6 gelagerten und entsprechend geformten Gleitsteine 17 in eine entsprechende Ausnehmung in der Aufnahmebohrung des Werkzeughalters 6, wodurch die Verriegelung des Werkzeugkopfes im Werkzeughalter und die kraftschlüssige Verbindung des axialen Anlagebundes 3a des Werkzeugkopfes 1 mit der entsprechenden Gegenfläche 3b des Werkzeughalters 6 erfolgt.

Auf dem dem Werkzeugkopf 1 gegenüberliegenden Ende ist die Spindel 8 mit einem Kopf 16 versehen, der eine ebene Fläche 19 besitzt, die bei weiterer Bewegung der Spindel 8 in Richtung auf den Werkzeughalter 6 zu auf eine Grundplatte 23 in der Bohrung des Werkzeughalters 6 auftrifft und bei weiterer Bewegung durch den Werkzeugkopf 1 mit seinen zylindrischen Bunden 7b aus der Aufnahmebohrung 5 des Werkzeughalters 6 herausdrückt.

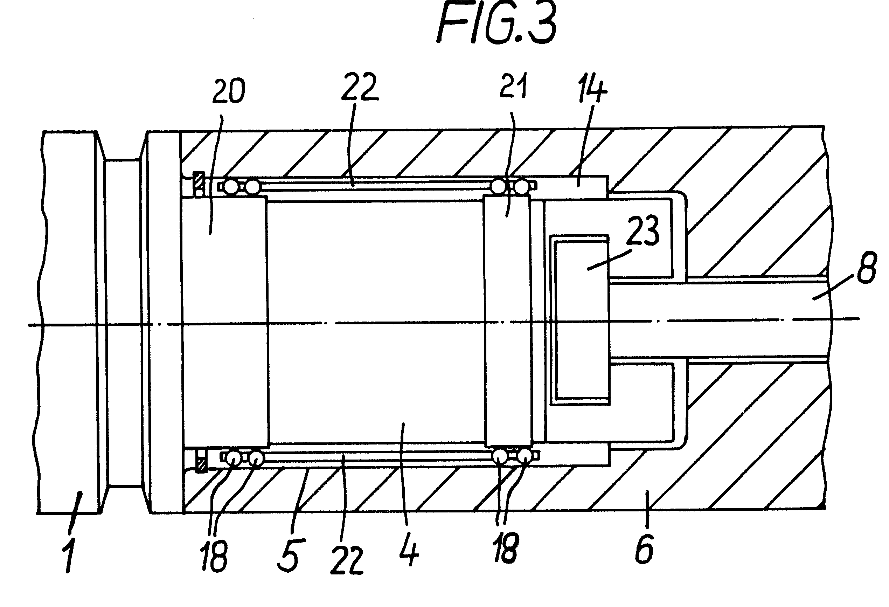

Bei der Ausführungsform nach Fig. 3 stützt sich der Werkzeugkopf 1 mit seinem Aufnahmezapfen 4 in der Aufnahmebohrung 5 des Werkzeughalters 6 über Kugeln 18 ab, die auf den zylindrischen Bunden 20, 21 des Aufnahmezapfens 4 des Werkzeugkopfes 1 gelagert sind. Sie sind jeweils mit einem Käfig 22 miteinander verbunden, der die Kugeln 18 in ihrer vorgesehenen Lage festhält. Die Betätigung und Verriegelung des Werkzeugkopfes 1 im Werkzeughalter 6 erfolgt dabei über eine im Werkzeughalter 6 gelagerte Spindel 8, die mit einem T-Stück 23 versehen ist, das in eine entsprechende Ausnehmung am Ende des Aufnahmezapfens des Werkzeugkopfes 1 eingesetzt ist.

Die Betätigung der Spindel erfolgt dabei vom Werkzeughalter her und ist deshalb in manchen Fällen nicht so vorteilhaft zu handhaben wie die Einrichtung nach Fig. 1. In jedem Fall kann aber auch bei dieser Ausführung der Erfindung der Werkzeugkopf 1 nach Beendigung des Bearbeitungsvorgangs in der Weise aus der Aufnahmebohrung des Werkzeughalters herausgedrückt werden, daß bei einer weiteren Bewegung der Spindel 8, in diesem Fall nach links auf den Werkzeugkopf zu, die Grundfläche 24 des T-Stücks 23 auf eine entsprechende Gegenfläche des Aufnahmezapfens auftrifft.

## P a t e n t a n s p r ü c h e

1. Kupplung zur Verbindung von Werkzeugkopf und Werkzeughalter an Werkzeugmaschinen, bei denen der Werkzeugkopf mit einem Aufnahmezapfen und einem ringförmigen Anlagebund versehen ist, die mit einer entsprechenden Aufnahmebohrung und einer ringförmigen Gegenfläche des Werkzeughalters zusammenwirken, wobei Werkzeughalter und Werkzeugkopf mittels Spannelementen, die über eine Spannvorrichtung betätigt werden, so verriegelbar sind, daß der Anlagebund des Werkzeugkopfes an der Gegenfläche des Werkzeughalters fest anliegt, dadurch gekennzeichnet, daß der Aufnahmezapfen (4) des Werkzeugkopfes (1) mit mindestens einem zur radialen Abstützung desselben im Werkzeughalter (6) dienenden zylindrischen Bund (7b) versehen ist, der gegenüber der zylindrischen Gegenfläche (7a) der Aufnahmebohrung (5) des Werkzeughalters (6) ein für eine sichere Verspannung des Werkzeugkopfs ausreichendes geringes Übermaß aufweist.

2. Kupplung zur Verbindung von Werkzeugkopf und Werkzeughalter an Werkzeugmaschinen nach Anspruch 1, dadurch gekennzeichnet, daß zur radialen Abstützung des Werkzeugkopfes (1) im Werkzeughalter (6) am Aufnahmezapfen des Werkzeugkopfes (1) zwei radiale zylindrische Bunde (7b, 25b) vorgesehen sind, von denen derjenige, der vom Werkzeug am weitesten entfernt ist (25b), einen geringeren Durchmesser besitzt als der dem Werkzeug näher gelegene Bund (7b).

3. Kupplung zur Verbindung von Werkzeugkopf und Werkzeughalter nach Anspruch 2, dadurch gekennzeichnet, daß die Durchmesser der zylindrischen Bunde (7b, 25b) am Aufnahmezapfen (4) des Werkzeugkopfes (1) gegenüber dem Durchmesser ihrer Gegenflächen in der Aufnahmebohrung (5) des Werkzeughalters (6) ein Übermaß aufweisen, das kleiner als 0,1 mm ist.

4. Kupplung zur Verbindung von Werkzeugkopf und Werkzeughalter an Werkzeugmaschinen nach einem der Ansprüche 1 bis 3, dadurch gekennzeichnet, daß anstelle der direkten Berühung zwischen den zylindrischen Bunden (7b, 25b) des Aufnahmezapfens (4) des Werkzeugkopfes (1) und den Gegenflächen in der Aufnahmebohrung (5) des Werkzeughalters (6) eine Kugelführung vorgesehen ist, die eine Längsverschiebung des Aufnahmezapfens (4) des Werkzeugkopfes (1) in der Aufnahmebohrung (5) des Werkzeughalters (6) ermöglicht.

5. Kupplung zur Verbindung von Werkzeugkopf und Werkzeughalter an Werkzeugmaschinen nach einem der Ansprüche 1 bis 4, dadurch gekennzeichnet, daß die Verriegelung des Werkzeugkopfes (1) mit dem Werkzeughalter (6) mittels eines längsverschieblichen Spannelements (8) erfolgt, das mit radial beweglichen Spannstücken zusammenwirkt.

6. Kupplung zur Verbindung von Werkzeugkopf und Werkzeughalter an Werkzeugmaschinen nach einem der Ansprüche 1 bis 5, dadurch gekennzeichnet, daß das längsverschiebliche Spannelement (8) auch als Mittel zum Herausdrücken des Werkzeugkopfes (1) aus der Aufnahmebohrung (5) des Werkzeughalters (6) dient.

7. Kupplung zur Verbindung von Werkzeugkopf und Werkzeughalter an Werkzeugmaschinen nach Anspruch 5 oder 6, dadurch gekennzeichnet, daß das längsverschiebliche Spannelement eine Spindel (8) ist, die in der Längsachse des Werkzeughalters (6) gelagert ist.

8. Kupplung zur Vernbindung von Werkzeugkopf und Werkzeughalter an Werkzeugmaschinen nach Anspruch 7, dadurch gekennzeichnet, daß die als längsverschiebliches Spannstück dienende Spindel (8) durch eine im Werkzeugkopf (1) angeordnete Mutter (10) geführt ist und mit deren Innengewinde zusammenwirkt.

9. Kupplung zur Verbindung von Werkzeugkopf und Werkzeughalter an Werkzeugmaschinen nach Anspruch 8, dadurch gekennzeichnet, daß die Umfangsfläche der Mutter (10) als Schneckenrad ausgebildet ist, das durch eine quer zur Längsachse angeordnete, im Werkzeugkopf (1) gelagerte Schnecke (11) betätigbar ist.

10. Kupplung zur Verbindung von Werkzeugkopf und Werkzeughalter an Werkzeugmaschinen nach Anspruch 8, dadurch gekennzeichnet, daß die Schnecke (11) mit einem Vierkant versehen ist, der seitlich aus einer Ausnehmung des Werkzeugkopfes (1) herausragt.

11. Kupplung zur Verbindung von Werkzeugkopf und Werkzeughalter nach Anspruch 5, dadurch gekennzeichnet, daß das längsverschiebliche Spannelement (8) durch eine im Werkzeugkopf (1) angeordnete Exzenterwelle geführt ist und mit deren Exzenterteil zusammenwirkt.

FIG. 1
II
9
11
3a
3b
5
8
15
6
19
2
16
1
10
II
7b
7a
4
25b
25a
17
14
23

FIG.2

11
13
12
8
1
10

FIG.3
8
23
6
14
21
18
4
22
22
5
20
18
1